# EUROPEAN PATENT APPLICATION

(11) **EP 4 641 460 A1**
(43) Date of publication of application: **29.10.2025**
(21) Application number: 24171947.5
(22) Date of filing: 23.04.2024
(51) Int. Cl.: G06Q 10/109, G06Q 10/1093

(54) **METHOD AND SYSTEM FOR REMOTE MEETING APPOINTMENT PRIORITY OVERWRITE**

(71) Applicant: Unify Beteiligungsverwaltung GmbH & Co. KG, 81739 München (DE)
(72) Inventor: Klaghofer, Karl, 81373 München (DE); Brochonski, Michael, 82620-265 Curitiba (BR)
(74) Representative: Schaafhausen, Anne

(57) **Abstract**

The present invention relates to a method and a system for remote meeting appointment priority overwrite. The invention allows for scheduling higher priority remote meeting appointments although the invited meeting participant's calendar shows busy. This is achieved by pre-empting and re-scheduling other already scheduled but lower priority meeting appointment to a later date. This invention ensures that the important things are being scheduled, discussed, and decided first, leading to economic and other benefits.

## Description

The present invention relates to a method and a system for Remote Meeting Appointment Priority Overwrite. The invention allows for scheduling higher priority remote meeting appointments, although the invited meeting participant's calendar(s) show busy. This is achieved by pre-empting & re-scheduling other already scheduled but lower priority meeting appointments to a later date. This invention ensures that the important things are being scheduled, discussed, and decided first, leading to economic and other benefits.

Today, the number of remote meetings (electronic meetings, conferences, telcos, etc.) has increased a lot, resulting in people's meeting calendars often being very busy, with double or more parallel calendar entries for conflicting meeting invites. It is difficult to schedule remote meeting appointments, i.e. it is difficult to find free common meeting slots among the inviting person A and all the needed meeting participants B1, B2, etc.

The current problems with scheduling remote meetings are explained in more detail below using two cases:
Case 1 - Vertical E-Consultation Meeting Appointment Scheduling: The problem applies for scheduling e-consultation appointments, such as telehealth e-consultation meetings between a patient and a doctor - but also for other vertical sector's e-consultation meeting appointment scheduling. For telehealth e-consultation appointment scheduling, it easily may happen that the doctor is fully booked and a free meeting slot to book for the patient may be available only in a few weeks or even only in a few months from now. This is a problem especially for patients who would need urgent appointments.
Case 2 - Horizontal unified Collaborations (UC) or Unified Collaboration as a Service (UCaaS) conference scheduling: The problem also applies to knowledge workers, leveraging collaboration and communication conferencing systems such as for example Unify Office, OpenScape UC, Mi Team Meetings, MiCollab, Microsoft Teams, etc., whereby the actual appointment scheduling is typically done by integrated groupware systems such as for example Microsoft Outlook or other groupware or web based appointment scheduling applications.

What both meeting types above (Case 1 and Case 2 above) have in common is that the priority of a required meeting is not considered at all in meeting scheduling. The result of the problem is that probably lower priority meetings got successfully scheduled before ("First booked - First served") although there probably would have been higher priority meetings that either could not be scheduled at all or could only be scheduled later or could only be scheduled by overbooking meeting participants.

This can lead to economic damages (e.g. late scheduling of an important financial meeting) or can even lead to critical human health situations (e.g. telehealth e-consultation meetings), if the "servicing" resources are booked (blocked) with prior appointments of lower priority, although appointment desires or urges exist which exhibit a higher priority that cannot be scheduled or only be scheduled later or probably even too late.

In most currently available groupware calendars or in other today's remote meeting scheduler applications invites can be sent with "Importance = High" or "Importance = Low" flag being set. It is just a priority flag being displayed with the calendar appointment entry at the invited participants.

In UC or UCaaS conference scheduling systems, overbooking is often the result of multiple meetings with overlapping participants being invited with overlapping / conflicting timeslots. It is the invited user who has to (manually) decide which of the invited parallel meeting to join.

E-consultation meeting invites (e.g. for telehealth e-consultation Meetings) are typically scheduled by the patient using web-based calendar systems. These systems follow the "First booked - First served" paradigm. Priority or criticality of the illness of the patient is not considered.

Therefore, the present invention is based on the object to provide a method and a corresponding system which overcomes the deficiencies and insufficiencies of the state of the art.

This object is solved by a method having the features according to claim 1 and a system having the features of claim 11. Preferred embodiments of the invention are defined in the respective dependent claims.

According to the invention, a method for remote meeting appointment priority overwrite is provided, wherein the method comprises the steps of:
- scheduling, by a priority user, a priority meeting appointment with one or more wanted user in a communication application of a system;
- checking, by the system, if the priority meeting appointment does not conflict with another meeting appointment of the one or more wanted user which has already been scheduled by one or more further user before the priority meeting appointment has been scheduled;
- ending the method in case no conflict between the priority meeting appointment and the other meeting appointment exists, otherwise;
- checking, by the system, in case that a conflict between the priority communication appointment and the other meeting appointment exists, if a precedence level or an explicit appointment overwrite attribute exists for the priority user,
- overwriting, by the system, the other meeting appointment with the priority meeting appointment in case the priority user has a higher precedence level compared to the one or more further user or in case the priority user has an explicit appointment overwrite, otherwise
- keeping, by the system, the other meeting appointment.

Meeting appointment precedence / priority overwrite of existing/conflicting but lower priority meeting appointments is a capability which is NOT known from today's remote meeting scheduler applications - neither in UC / UCaaS conference appointment scheduling, nor in Vertical E-Consultation appointment schedulers. Thereby, the invention can contribute to discuss, clarify, and decide important things first, which can lead to economic benefits, performance benefits or even human health benefits in case of telehealth e-consultation.

In the sense of the present invention, the terms Meeting, Remote Meeting, Appointment, Remote Appointment, Meeting Appointment and/or Remote Meeting Appointment are all exchangeable and refer to electronic meetings between two or more users. Contrary to ad-hoc calls or ad-hoc meetings (A calls B in an ad-hoc manner), in many cases of communication and collaboration, meetings are being scheduled in advance, allowing for better planning and better preparation for all participants. For such electronic meeting scheduling, groupware calendar systems are being used and often integrated with the actual communication and collaboration tools.

In the sense of the invention the term groupware service - also known as group software (application), collaboration software or collaborative software - refers to software that enables a group or team to work together across time and/or space. In other words, it is a computer-based system that supports a group of people in their task or goal and provides an interface for a shared work environment. Groupware service can for example comprise calendar, scheduling, email applications etc. Groupware calendar tools are for example Microsoft Exchange / Outlook, Microsoft Office 365, Google calendar or any other vendor's calendar and meeting scheduling systems.

In the sense of the invention the term Communication and Collaboration Tools, also known as collaboration platforms, are software applications that facilitate teamwork among team members and external parties across various locations. Communication: This involves the sharing of information, which can take many forms including one-way announcements, two-way conversations, and many-to-many discussion streams. Communication is essential for opening the door to collaboration. Collaboration: This goes beyond simple discussion and exists in the space of "two-way" communication. Collaboration is an act in which people join to create or accomplish something. It requires rich communication to be successful but goes beyond just sharing information. Collaboration tools support new ways of working, promote team spirit, and help break down hierarchies. They increase team efficiency and productivity by allowing team members to work directly in shared areas instead of spending a lot of time writing emails. These tools offer a wide range of functionalities, including informal coordination, joint task management, complex project management, and even documentation purposes. They may serve as a common storage system where all current documents are available. Some platforms allow quick informal coordination via chat or instant messaging. They can also be used for documentation purposes, as they can store decision-making processes in a comprehensible manner. In summary, while communication can exist without collaboration, collaboration cannot exist without rich and clear communication. These tools are designed to enhance both communication and collaboration, thereby increasing the efficiency and productivity of teams. Examples are Mitel's Unify Office, OpenScape UC Conferences, MiCollab, Mi Team Meetings, but also other vendor's tools such as Microsoft Teams, etc.

In the sense of the invention the term Meeting is using one or more of the communication media types: Voice, Video, Screensharing, Textual collaboration.

In the sense of the invention, the terms E-Consultation, E-Consultation Appointment, E-Consultation Meeting refer to a remote electronic meeting appointment requested by a User A to get special service by an expert in the given vertical market field. For example, in case of telehealth e-consultation meetings, a patient (User A) is requesting a remote meeting appointment with the doctor. Examples for e-consultation tools are Mitel's Virtual Care Collaboration Service (VCCS) used for telehealth e-consultation meetings. Further, it is understood that e-consultation meetings are using one or more of the communication types: Voice, Video, Screensharing, Textual collaboration.

In the sense of the invention, the terms Priority Meeting, Priority Appointment, Precedence Meeting, Precedence Appointment is understood as a remote meeting or e-consultation appointment which is being invited by User A having precedence, authorized to overwrite existing scheduled but lower priority meetings. Meeting overwrite is only possible if the User A has a higher precedence level than any of the members of the lower priority meeting to be overwritten.

In sense of the invention, a lower priority meeting / appointment is understood as an already scheduled remote meeting or e-consultation appointment subject to eventually being overwritten (and re-scheduled) by a higher priority meeting appointment.

In the sense of this invention, the terms Precedence Level, Priority Level, Meeting or E-Consultation Precedence Level or Priority Level are meaning that in the base implementation, this is a level between 1 and 5 (Multi Level Precedence) assigned to a user of a system, with 1 being the lowest level and 5 being the highest level. A priority meeting invite can overwrite an already scheduled but lower priority meeting, provided that the inviting User A has a higher precedence level than any member of the already scheduled lower priority meeting. However, the precedence level is not fixed to the range 1 to 5 but can be extended or subdivided as required.

In terms of the invention, a User A or priority user is a user aiming for inviting a priority meeting. Eventually scheduled, but lower priority meetings are being overwritten, provided that any user of the lower priority meeting have a lower priority level than the priority User A.

In terms of the invention, a Wanted User is in a 1:1 meeting the user with whom the inviting User A (priority user) wants to schedule a meeting, although this wanted user is already booked for another meeting. For example, in case of e-consultation, the wanted user is the expert from whom the User A wants to get service. In case of telehealth e-consultation, the wanted user is the doctor (whereas the priority User A is the patient). In case of UC or UCaaS multi-party conference scheduling, there may be multiple wanted users.

In the sense of the invention, a Meeting Overwrite, Appointment Overwrite or E-Consultation Appointment Overwrite is the action to accept an incoming priority meeting invite by inviting priority User A, although at the given date and time the Wanted User is already booked/busy, but busy only with a lower priority scheduled meeting.

In terms of the present invention, a Temporary Precedence Level or Temporary Criticality Level is used to control meeting date/time overwrite possibilities. If the requesting meeting appointment is calculated as "high critical" (mapped to e.g. meeting precedence level 5), this may cause another already scheduled lower appointment being re-scheduled.

The present invention can be applied in any type of scheduling of "horizontal" UC or UCaaS remote meetings or scheduling appointments for E-Consultation for various verticals. The following examples are not exhaustive:
- Healthcare: Patient with critical illness scheduling priority telehealth e-consultation meeting appointment, which can even save lives.
- Finance: VIP customer scheduling priority e-consultation meeting in financial sector with his bank.
- Retail: VIP customer (who has bought higher volumes in the past) scheduling priority remote shopping meeting with his favorite shop/retailer, leading to more revenue for the retailer/shop.
- Public Sector: Citizen scheduling priority remote governmental agency support service (for a critical passport renewal due to an important business travelling next week).

According to a preferred embodiment the method further comprises:
- prompting, by the system, the priority user to enter user input data and/or to select pre-formulated user input data options; and
- using, by the system, the user input data and/or user input data options to assign the precedence level if no such level exists and/or to assign a temporary precedence level or criticality level; and/or
- entering, by the user, input data and/or selecting pre-formulated user input data options; and
- using, by the system, the user input data to assign the precedence level if no such level exists and/or to assign a temporary precedence level or criticality level.

According to another preferred embodiment, the method further comprises automatically assigning, by the system, the explicit appointment overwrite attribute to the priority user on the basis of the role of the priority user.

According to still another preferred embodiment, the method further comprises setting, automatically by the system or manually by the priority user, the explicit appointment overwrite attribute for the priority meeting in case the explicit appointment overwrite attribute was assigned to the priority user.

Further, according to a preferred embodiment, the method further comprises checking, by the system, if an overwrite protection exists for the one or more further user, wherein the overwrite protection prevents the scheduled meeting of the one or more further user from being overwritten.

According to yet another preferred embodiment, the method further comprises, if the other meeting appointment is kept:
- rejecting, by the system, the priority meeting appointment; or
- proposing, by the system, an alternative meeting appointment for the priority meeting appointment; or
- overbooking, by the system, the one or more wanted user with the other meeting appointment and the priority meeting appointment, whereby the one or more wanted user can choose which meeting to attend.

According to yet another preferred embodiment, the method further comprises:
- storing, by the system, the precedence level and/or the temporary precedence level or criticality level of the priority user and/or of the one or more wanted user and/or of the one or more further user in a database of the system; and/or
- fetching, by the system the precedence level and/or the temporary precedence level or criticality level of the priority user and/or of the one or more wanted user and/or of the one or more further user from a database of the system if one or more of these precedence levels were already stored in the database.

According to yet another preferred embodiment, the method further comprises:
- using a groupware service with a groupware server, a web calendar application or scheduling system to schedule appointments, to exchange e-mail, notification, and/or message;
- using a groupware client or web browser client for collecting user input data; and
- using a communication and/or e-consultation system for the communication between users.

According to yet another preferred embodiment, the user input data and/or user input data options comprises text, voice, video, gestures and/or sensor data.

According to yet another preferred embodiment, the method further comprises:
- analyzing, by an analytics function of the system, the user input data and/or user input data options; and
- assigning, by the analytics function, the precedence level and/or the temporary precedence level or the criticality level to the priority user.

According to yet another preferred embodiment, the method further comprises presenting, by the communication application, to the priority user another meeting appointment of the one or more wanted user which has already been scheduled by one or more further users before the priority meeting appointment has been scheduled, wherein only the another meeting appointment of the one or more wanted user which has already been scheduled is presented which can be overwritten by the priority user due to his precedence level. In other words, in the absence of other mechanisms such as an overwrite attribute, the priority user will only see the meeting appointments that he /she could overwrite. It is also possible that not only the priority user's precedence level is used to decide which meetings are displayed, but also other aspects. Such other aspects could be, for example, an overwrite attribute and/or the context of the meeting (e.g. finances, urgently needed help with health issues, etc.). However, it is also possible for the wanted user to mark certain meetings that may be overwritten. The presentation of the other meeting appointments of the wanted user can therefore be dynamically adapted based on various criteria (context of the meeting, role of the user, urgency of the meeting, precedence level of the user and/or other overwrite attributes). It is also possible to display such meeting appointments or slots that can be overwritten, with an identifier or a term such as "conditionally busy" for the priority user. The term another meeting appointment also comprises several such meeting appointments from other users and is not limited to one.

According to the invention, a system for remote meeting appointment priority overwrite is provided, wherein the system is configured to perform the method according to any one of the above-mentioned embodiments.

According to a preferred embodiment, the system further comprises:
- a groupware service with a groupware server, a web calendar application or scheduling system, wherein the groupware service in configured to schedule appointments, to exchange e-mail, notification, and/or message;
- a groupware client or web browser client which is connected to the groupware server or the web calendar application or the scheduling system; and
- a communication and/or e-consultation system.

According to another preferred embodiment, the system further comprises an analytics function for analysis of user inputs and/or for calculating the precedence level and/or the temporary precedence level or criticality level of the priority user and/or the one or more wanted user and/or the one or more further user.

According to still another preferred embodiment, the system further comprises a user profile database configured to store user related information and data and/or the precedence level and/or the temporary precedence level or the criticality level.

Further, according to a preferred embodiment, the analytics function is configured to use machine learning, ML, artificial intelligence, Al, natural language processing, NLP, text-to-speech analytics and/or speech-to-text analytics.

It has also to be noted that aspects of the invention have been described with reference to different subject-matters. In particular, some aspects or embodiments have been described with reference to apparatus type claims, whereas other aspects have been described with reference to method type claims. However, a person skilled in the art will gather from the above and the following description that, unless otherwise notified, in addition to any combination between features belonging to one type of subject-matter, also any combination between features relating to different types of subject-matters is considered to be disclosed with this text. In particular, combinations between features relating to the apparatus type claims and features relating to the method type claims are considered to be disclosed. In addition, features relating to one of the embodiments may be combined with other features of another embodiment, the drawings or the claims, where possible. The invention and embodiments thereof will be described below in further detail in connection with the drawing(s).
- Fig. 1: shows a flowchart of the method for remote meeting appointment priority overwrite in an overview example according to an embodiment of the invention.
- Fig. 2a: shows a flowchart of the method for remote meeting appointment priority overwrite in an example for a telehealth e-consultation meeting scheduling according to another embodiment of the invention.
- Fig. 2b: shows a schematic illustration of an GUI example for a telehealth e-consultation appointment calendar (adapted view, relative to User A's precedence level of the remote meeting appointment priority overwrite example of Fig. 2a) according to an embodiment of the invention.
- Fig. 3: shows a schematic illustration of a high-level system architecture on basis of an example of a telehealth e-consultation system according to an embodiment of the invention.
- Fig. 4: shows a schematic illustration of a user profile database attributes table on basis of an example of a telehealth e-consultation system according to an embodiment of the invention.
- Fig. 5: shows a flowchart of the method for remote meeting appointment priority overwrite on basis of an example of horizontal unified communications (UC) or unified communications as a service (UCaaS) meeting invite with multiple users involved according to another embodiment of the invention.

All figures can be understood in connection with both the method according to the invention and the system according to the invention, i.e. even if only the method or only the system is mentioned. This may apply to both aspects of the invention.

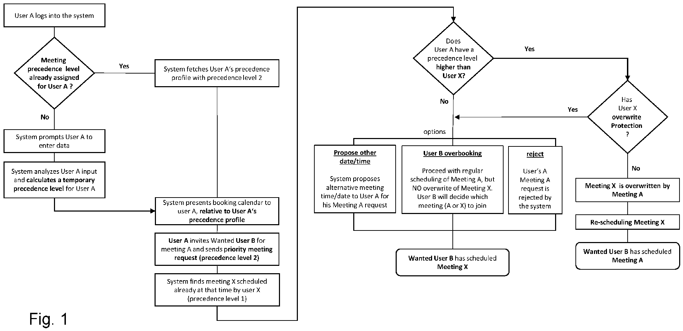

Fig. 1 shows a flowchart of the method as an overview example. This example shows several ways in which the method according to the invention can be used. However, some of these possibilities are only optional and are intended to show what is possible with the method according to the invention. For this example, it is assumed that a User A wants to set up a meeting with User B, whereby this meeting should be a priority meeting. A priority meeting invite shall be able to overwrite another existing, lower priority calendar entry. This is beneficial to allow an important (priority) meeting to be scheduled, in spite of invited participant(s) already being busy with other scheduled but lower priority meetings. This scenario shown here in Fig. 1 is not limited to a specific field of application such as telehealth, finance or just a pure business meeting, but can be used in any conceivable field. In the following, examples from various of these fields are given for certain options of the method. However, it is not intended to limit the invention to these, but merely serves to provide a better understanding of these options. In case User A is not already in this system, he/she logs into the communications system on which the method is based. The system then checks whether a precedence level is already stored for User A.

A meeting appointment precedence level value in a range between 1 and 5 can be assigned to every user within the context of a system (an enterprise communication system, a doctor's e-consultation system for all his patients in a user database (DB), or the like), precedence level 1 (L1) being the lowest level, whereas precedence level 5 (L5) is the highest level. A higher-level user can overwrite existing, conflicting "lower-level meeting appointments".

There are different criteria based on which a precedence level can be assigned (administered) to a user, e.g. based on hierarchy of an enterprise organization, based on patient's health/illness data in case of a telehealth e-consultation system, etc. The administration of a user's meeting appointment precedence level may be assisted by data analytics. Analysing "big data" such as for example analysing EHR (Electronic Health Records) data in case of a telehealth e-consultation system for classification purposes is known technology and thus not further described in this invention.

The precedence level (1 to 5) may be explicitly signalled as part of the calendar appointment invite message. The precedence level may always be signalled along with a meeting invite message or may only be signalled upon user activation (e.g. login) or admin activation.

User activation may be based on user configuration settings or user activation based on a per meeting invite (user can select on a per meeting invite whether a given meeting invite shall be a priority invite (priority meeting) or just a regular meeting invite).

A further option may be that the precedence level is not explicitly being signalled along with the meeting invite message but derived by the system from a user profile database, where the assigned or also temporary meeting precedence levels are stored.

Instead of only 5 precedence levels, a system may choose to implement any other number of useful precedence levels, e.g. just 2 levels or 3 levels or 10 levels etc. The number of precedence levels may be a system configuration option.

Adaptive Precedence Level (Rewards): Over time a user's assigned precedence level may change. Such a change may be provisioned manually or may be updated in the user profile database automatically. As an example, a sales user with a very high performance (sales "user of the month") gets automatically promoted to a next meeting precedence level, as a reward; this for example to get priority access to members of the Senior Executive team in case of future (important) meeting appointments to be scheduled for a next important customer project.

In the case that a meeting precedence level is already defined for User A, this level is used unless there are other reasons for not using it. Other reasons could be, for example, that User A is able to use a text field to indicate why he/she absolutely needs this meeting. This input can then be taken into account or evaluated by an analytics function. In the event that no meeting precedence level can be assigned to User A, either a predefined value (which can be modified in the settings) is specified, or User A enters the reasons for the meeting. These can be predefined input fields or options, but also free text. It is also conceivable to take voice or video input into account. It is also possible that the user is guided through this process with the help of a bot or another application. The user input can be evaluated manually or with the help of an analytics function and then the user can be assigned a temporary precedence level adapted to the result of the analysis. As soon as User A has been assigned a precedence level, a calendar booking interface is usually displayed, which may be part of groupware or integrated into the system as calendar server application independently. User A can now generate a Meeting A with a Wanted User B via this interface. User A can set this meeting A to be treated as a priority meeting or this may already be preconfigured by the system. Wanted User B is a user who plays a special role in the meeting, e.g. the doctor in a telehealth e-consultation. Depending on the precedence level assigned to User A, the system may only display appointments that are still free or appointments of users with a lower precedence level than User A. In the next step, the system checks whether an appointment already exists for the period selected by User A. In this example, an appointment is found from User X who has booked the meeting X at the same time as the meeting A of User A. However, User X has a lower precedence level than User A. This was also checked by the method. The method then checks whether User X has been assigned overwrite protection. A user may have a special "overwrite protection", although he/she may not have the highest precedence level assigned. For example, in telehealth e-consultation a patient may have only precedence level 2 assigned (not the highest level due to patient/health status/classification) but the doctor has set the "meeting overwrite protection" flag for this patient, due to any reason (patient complained in the past of re-scheduled meetings or patient is a new patient with a new disease and the doctor wants to give special care during the first weeks and months). Also, a new patient may automatically have set the flag "overwrite protection", as the first appointment of a new patient with the doctor should not be overwritten. A further example for "overwrite protection" may be if a temporary meeting precedence level has been calculated being higher than a patient's usual meeting precedence level.

At the groupware / calendar server application, upon receiving a priority meeting invite by User A (e.g. with precedence level = 2), a conflicting but lower priority meeting entry (precedence level 1 users only) may be subject of being overwritten. As a result, priority User A's meeting request overwrites the calendar entry of the existing meeting X of User X. The meeting invited by the priority User A gets successfully scheduled. The lower priority meeting X that got pre-empted, gets re-scheduled. For re-scheduling purposes, the organizer (User X) of the pre-empted meeting X typically receives a notification with a proposal for a new date/time. Upon acceptance by that organizer, all participants of the re-scheduled meeting get the updated invite (calendar entry).

In accordance with the invention, an explicit "appointment overwrite" message can also be used instead of different precedence levels. An explicit "overwrite" attribute or message may be used and signalled with the meeting invite message by a privileged user. Only selected authorized users may be provisioned with such a capability. Upon receiving such an "appointment overwrite" attribute or message along with a meeting invite, a conflicting meeting will be pre-empted / re-scheduled, if no member of the conflicting meeting appointment is provisioned with an "overwrite protection" attribute. However, this variant is similar to a multi-level meeting precedence option with just 2 precedence levels (1 and 2).

As a basis to control appointment overwrites, the role of a user (e.g. Executive Management team member, VIP group user, Manager, private patient,..) can invoke meeting overwrite of lower priority meetings (members with only lower roles), or can get exceptional other treatment in terms of appointment scheduling, e.g. their meetings may not be overwritten or they may always be able to overwrite up to a certain precedence level. Based on user roles, the flag "meeting overwrite protection" may automatically be assigned to a user. From an implementation perspective, the different levels of roles in an organization may again be mapped similar to multi levels (1 to many) meeting precedence concept.

Criticality may also be used to control appointment overwrite, for example, in telehealth e-consultation appointment scheduling. A Patient A with a severe diagnosis (e.g. cancer) aiming for scheduling a short-term meeting appointment with the doctor (patient is doing very bad) can overwrite a lower priority doctor's meeting appointment from Patient B. This is possible as cancer diagnosis has assigned Patient A into a high criticality profile. On the other side, Patient B is a healthy patient and is scheduled just for a regular routine small health check appointment. As described earlier, "meeting overwrite" results in Patient B receiving a re-scheduled, later meeting appointment with the doctor. However, this implementation variant can also be realized with a multi-level meeting precedence option, with the illnesses being mapped to different classes (levels) for meeting precedence. Criticality is not limited to this example but can also be applied in other areas, e.g. security, finance, economically relevant topics that require preferential treatment.

Criticality of the given meeting invite may be calculated from the subject and/or other accompanying meeting invite information (e.g. text in web scheduling form) or based on other existing data.

For Example, in telehealth e-consultation appointment invites, the illness symptoms provided by the patient, as part of the web-based appointment scheduling process, may be analysed by Machine Learning for determination of criticality. This may be done with or without consideration of already existing patient data available, such as data in EHR (Electronic Health Record). Examples for horizontal (Enterprise) UC / UCaaS Meeting invites is data that can be transformed into useful information by an AI analytics system include. Groupware calendar tools often have useful information that can be used to ascertain a precedence level, which include but are not limited to Hierarchy structure and/or Previous user's interactions. Hierarchy structure is a feature which may be present and can help ascertain precedence level based on the hierarchical relationship between users in a scheduled meeting (or the user who setup the meeting), especially relevant for enterprise use cases. Previous user's interactions may be analysed by an AI Analytics system to tailor a precedence level. It is common that groupware calendar tools have integration with unified communications platforms like transcripts of previous meetings, in case of a recurrent meetings. Such data can be used to extract information to outline potential increased or decreased importance of future meetings, e.g. with theme, sentiment, urgency analysis, etc.

Analyzing "big data" such as for example analyzing EHR (Electronic Health Records) data in case of a telehealth e-consultation system for classification purposes is known technology and thus not further described in this invention.

A resulting "temporary precedence level" (or temporary criticality level) is being calculated and used to control meeting date/time overwrite possibilities. If the requesting meeting appointment is calculated as "high critical" (mapped to e.g. meeting precedence level 5) this may cause another already scheduled lower appointment being re-scheduled. As already shown, a temporary meeting precedence level may be calculated either if no assigned precedence level is yet available for the user in the user profile database (maybe a new user/ patient) or also in addition to the administered base meeting precedence level. Combinations of one or more of the above implementation options are also possible.

In the event that User A does not have a higher precedence level than User X or User X has overwrite protection, the meeting X previously set up by User X is not overwritten but remains in place in any case. There are several ways in which User A's meeting A can be handled. One possibility is that the meeting A is simply rejected. Furthermore, User A can also be given an alternative suggestion for rescheduling meeting A. Another possibility would be to overbook wanted User B, i.e. to make both meetings (A and X) available for selection and User B would then have to decide which one to attend.

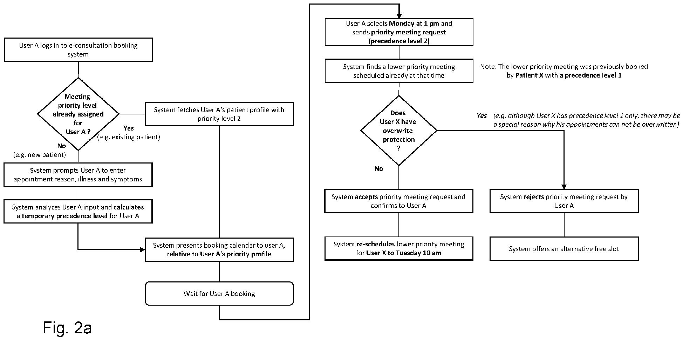

Fig. 2a shows a flowchart of the method in an example for a telehealth e-consultation meeting scheduling. A user, in this case User A, logs into an e-consulting booking system which is connected to the method according to the invention or on which the method according to the invention is executed. The method then checks whether User A has already been assigned a precedence level. If User A is already an existing patient or a patient registered in the system, its precedence level is automatically assigned. However, it is also possible to include optional modifications, for example, to temporarily increase a patient's priority due to temporary symptoms or complaints that the patient has and can communicate to the system. In this case, User A is assigned a priority level of 2 if he/she is already a patient. In the event that the patient is new and no health data exists in the system, the new patient will be asked by the system about the reason for the consultation, e.g. illness if known and/or symptoms. It is also possible that the new patient is shown a selection option from which various topics, symptoms etc. can be selected. The system or method then uses the new patient's input to analyze his/her current health situation and calculates a temporary precedence level for the new patient (User A). The method/system then presents User A, whether new patient or existing patient, with a calendar appointment booking interface based on User A's priority or precedence level and waits for User A's booking entry. In this case, it is assumed for the further procedure that User A has a precedence level of 2. User A selects Monday at 1 pm and sends a priority meeting request (with precedence level 2). System/method finds a lower priority meeting scheduled already at that time. The lower priority meeting was previously booked by another User/Patient X with a precedence level 1. In the next step, the method/system checks whether overwrite protection exists for User X. Optionally, such overwrite protection can exist, e.g. if certain circumstances occur or if it has been set manually. If there is overwrite protection, a meeting cannot be overwritten by other meetings, regardless of the user's priority. If there is overwrite protection for User X in this example, the system/method will reject the priority meeting request from User A and suggest an alternative date for User A, e.g. for Tuesday at 10 am. However, if there is no overwrite protection for User X, the priority meeting request from User A will be accepted by the method/system and User A will be granted the meeting appointment of User X. User X, on the other hand, will be rescheduled by the system/method with a new appointment, which in this example is Tuesday at 10 am.

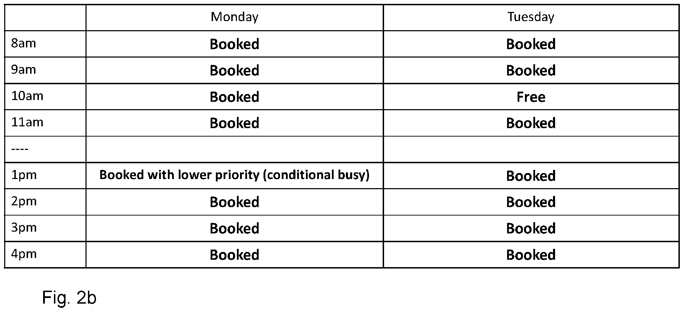

Fig. 2b schematically shows an GUI example for a telehealth e-consultation appointment calendar (adapted view, relative to user A's precedence level of the remote meeting appointment priority overwrite example of Fig. 2a). Patient/User A (meeting priority level 2 already assigned) felt bad on Sunday and needs an emergency telehealth e-consultation appointment with his doctor as soon as possible. A free e-consultation meeting slot would be possible only Tuesday at 10 am. This is too late for User A and therefore he/she looks for a Monday slot.

All slots shown as "booked" in the calendar are from other patient's e-consultation meetings already scheduled, who have at least the same or higher meeting precedence levels (2, 3, 4 or 5) compared to User A, meaning those "booked" slots are not subject to be priority overwritten by User A. However, on Monday at 1 pm the scheduled appointment is a lower priority meeting (relative to User A's own priority) and therefore it is being offered to User A. It is also possible to display such meeting appointments or slots that can be overwritten, with an identifier or a term such as "conditionally busy" for the User A. I.e. that other Patient/User X in this example has priority level of just level 1 and thus is subject to be overwritten by User A (Level 2) for a possible priority meeting. For example, an identifier such as "conditionally busy" can also depend on aspects other than just the precedence level of the user, e.g. the context of the meeting or other aspects can also play a role. What is displayed to user A can therefore depend on various aspects. Further, User X does not have any special overwrite protection. User A picks the Monday 1 pm slot and books this appointment, which is causing meeting overwrite at the scheduling calendar system. The original booked appointment of User X gets re-scheduled and User X is notified that his/her appointment has been rescheduled to Tuesday 10 am according to this example.

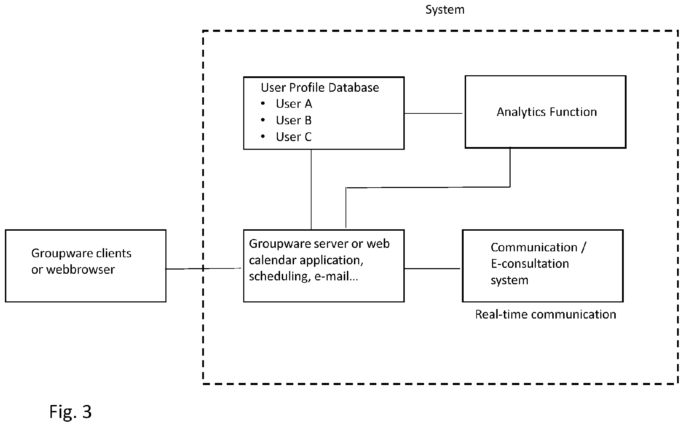

Fig. 3 schematically shows a high-level system architecture on basis of an example of a telehealth e-consultation system. However, the system shown here is not limited to telehealth e-consultation and can be applied to any other field such as government or finance, or any other horizontal and/or vertical communication and collaboration. The system shown in Fig. 3 advantageously features a groupware server or a web calendar application. Such servers or applications are web-based scheduling applications (e.g. MS Exchange, O365 or others) with which the communication/e-counseling system is integrated, or which may be part of the actual communication/e-counseling system component. Furthermore, such a system has groupware clients (e.g. MS Outlook client) or web browsers (client) with access to web-based calendar and scheduling applications. This is used by User A to plan his (priority) meeting appointments. The system also advantageously includes a communication or e-consultation system. Such a system often comprises a real-time system application used for the actual electronic meeting, e.g. Mitel's Unify Office, VCCS (Virtual Care Collaboration Service), OpenScape UC, MiCollab, Mi Team Meetings, etc. Optionally, the system includes a user profile database function or storage, e.g. a database of user profiles in which the assigned or temporarily calculated meeting precedence levels for each user are stored. The system can also comprise an analytics function. The analytical function may be configured to calculate, for example, the meeting precedence level using AI/ML technologies. User input data (text or voice or video or images) - input by the User A as part of the invitation message/invitation form - can be the basis for the analytics function to calculate a temporary precedence level for the meeting. This option can be used in addition to or instead of (statically) assigned priority levels for meetings. For example, web-based telehealth tools for electronic appointment scheduling may include input fields for the following information: Reason for appointment request (condition assumed by patient), symptoms (description of symptoms), blood pressure data or other data if available, and other information such as pre-existing diseases etc. and any further information (free text).

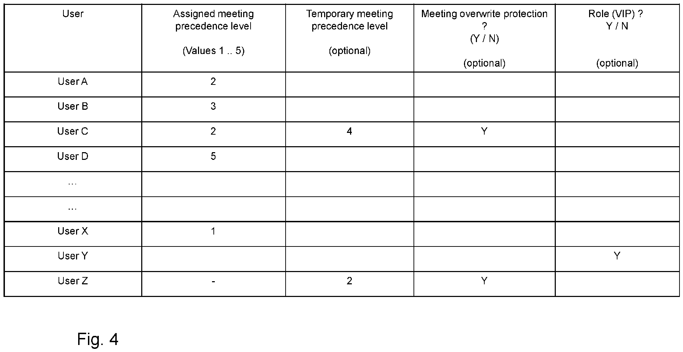

Fig. 4 schematically shows a user profile database attributes table on the basis of an example of a telehealth e-consultation system. The table is described in more detail below based on the various users and their individual attributes.

User A has a meeting precedence level of 2 assigned. User A may overwrite meeting appointments of User X (Level 1).

User B has a meeting precedence level 3 assigned. User B may overwrite meeting appointments of User X (Level 1) and/or User A (level 2).

User X has a precedence level 1 assigned, no overwrite protection.

User D has a highest precedence level 5 assigned. No other User can overwrite his/her doctor appointment(s). This is the same as if he/she would have assigned the "meeting overwrite protection" flag.

User Z is a new patient not yet having an assigned (statically) meeting precedence level. Therefore, upon e-consultation appointment request, User Z's input text (reason, illness symptoms, etc.) have been analyzed by an analytics function of the system and it was calculated a temporary meeting precedence level of 2. Such a User in this example automatically gets assigned the "overwrite protection" flag, as the doctor wants to avoid that such a new patient's (first) appointment gets preempted by someone else.

User C: Although User C is a longer-term patient of this doctor (Level 2 assigned since many years due to diabetic, for example), there is an additional temporary meeting precedence level entry for this user of value 4. The analytics function (based on user inputted symptoms) calculated a higher temporary value 4 (compared to the usual value 2) based on the result of User C's recent medical examinations, i.e. it looks like this User/Patient C's disease situation/ condition got significant worse. Also due to the gap between previous and current temporary precedence level, it is better for User C's situation not to allow for meeting preemptions in this phase. Therefore, it gets assigned the "meeting overwrite protection" flag.

User Y is a private patient (VIP patient/role). Exceptional treatment (implementation / configuration dependent) may apply for this patient based on his role. For example, his appointments never get overwritten by others, but he may overwrite other appointments up to a specific level, etc. He is simply a special user/patient.

A User may have a special "overwrite protection", although he/she may not have the highest precedence level assigned. For example, in telehealth e-consultation, a patient may have only precedence level 2 assigned (not the highest level due to patient/health status/classification) but the doctor has set the "meeting overwrite protection" flag for this patient due to any reason (patient complained in the past of re-scheduled meetings or patient is a new patient with a new illness and the doctor wants to give special care during the first weeks and months). Also, a new patient may automatically have set the flag "overwrite protection" as a the first appointment of a new patient with the doctor should not be overwritten. A further example for "overwrite protection" may be if a temporary meeting precedence level has been calculated being higher than a patient's usual meeting precedence level.

The precedence level may be explicitly signalled as part of the calendar appointment invite message. The precedence level may always be signalled along with a meeting invite message or may only be signalled upon user activation or admin activation.

User activation may be based on user configuration settings or user activation based on a per meeting invite (user can select on a per meeting invite whether a given meeting invite shall be a priority invite or just a regular meeting invite).

A further option may be that the precedence level is not explicitly being signalled along with the meeting invite message but derived by the system from a user profile database, where the assigned or also temporary meeting precedence levels are stored.

At the groupware / calendar server application, upon receiving a priority meeting invite by User A (e.g. with precedence level = 2), a conflicting but lower priority meeting entry (precedence level 1 users only) may be subject of being overwritten. As a result, priority User A's meeting request overwrites the calendar entry of the existing Meeting B. The meeting invited by the priority User A gets successfully scheduled. The lower priority meeting that got pre-empted, gets re-scheduled. For re-scheduling purposes, the organizer of the pre-empted meeting typically receives a notification with a proposal for a new date/time. Upon acceptance by that organizer, all participants of the re-scheduled meeting get the updated invite (calendar entry).

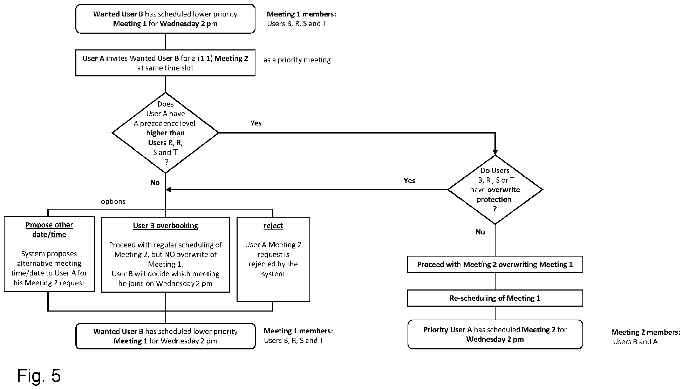

Fig. 5 shows a flowchart of the method on basis of an example of horizontal unified communications (UC) or unified communications as a service (UCaaS) meeting invite where multiple users are involved. In this example, wanted User B has already scheduled a lower priority Meeting 1 on Wednesday at 2 pm. Meeting 1 members are Users B, R, S and T. User A invites wanted User B for a 1-to-1 meeting 2 at the same time slot (Wednesday 2 pm) and marks this meeting as a priority meeting. The system/method now evaluates whether User A has been assigned a higher precedence level than Users B, R, S or T. If this is the case, the system/method next checks whether one of the Users B, R, S or T has overwrite protection. If this is not the case, Meeting 1 is overwritten by Meeting 2 and Meeting 1 is rescheduled. The organizer of Meeting 1 (User B) receives a proposal (date/time) for the new re-scheduled Meeting 1 by the method/system and confirms the proposal. A new invite for new Meeting 1 (date/time) is sent out to all Meeting 1 participants B, R, S, T, and Meeting 2 is scheduled for Wednesday 2 pm for members User A and User B.

However, if User A does not have a higher precedence level than all of the members of Meeting 1 or if one of the members of Meeting 1 has overwrite protection, Meeting 1 will not be overwritten by Meeting 2. There are several possible options for conducting Meeting 2. On the one hand, the method/system can suggest an alternative appointment for Meeting 2 or simply reject Meeting 2. Another possibility is that the Wanted User B is overbooked, i.e. both Meetings 1 and 2 take place at the same time or overlap and User B either attends both meetings or has to choose one. Ultimately, this means that for Meeting 1, regardless of which option is offered for Meeting 2, Meeting 1 remains in place for the time being.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for remote meeting appointment priority overwrite, wherein the method comprises the steps of:
- scheduling, by a priority user, a priority meeting appointment with one or more wanted user in a communication application of a system;
- checking, by the system, if the priority meeting appointment does not conflict with another meeting appointment of the one or more wanted user which has already been scheduled by one or more further user before the priority meeting appointment has been scheduled;
- ending the method in case no conflict between the priority meeting appointment and the other meeting appointment exists, otherwise;
- checking, by the system, in case that a conflict between the priority communication appointment and the other meeting appointment exists, if a precedence level or an explicit appointment overwrite attribute exists for the priority user,
- overwriting, by the system, the other meeting appointment with the priority meeting appointment in case the priority user has a higher precedence level compared to the one or more further user or in case the priority user has an explicit appointment overwrite, otherwise
- keeping, by the system, the other meeting appointment.

2. The method according to claim 1, wherein the method further comprises:
- prompting, by the system, the priority user to enter user input data and/or to select pre-formulated user input data options; and
- using, by the system, the user input data and/or user input data options to assign the precedence level if no such level exists and/or to assign a temporary precedence level or criticality level; and/or
- entering, by the user, input data and/or selecting pre-formulated user input data options; and
- using, by the system, the user input data to assign the precedence level if no such level exists and/or to assign a temporary precedence level or criticality level.

3. The method according to any one of the preceding claims, wherein the method further comprises automatically assigning, by the system, the explicit appointment overwrite attribute to the priority user on the basis of the role of the priority user.

4. The method according to any one of the preceding claims, wherein the method further comprises setting, automatically by the system or manually by the priority user, the explicit appointment overwrite attribute for the priority meeting in case the explicit appointment overwrite attribute was assigned to the priority user.

5. The method according to any one of the preceding claims, wherein the method further comprises checking, by the system, if an overwrite protection exists for the one or more further user, wherein the overwrite protection prevents the scheduled meeting of the one or more further users from being overwritten.

6. The method according to any one of the preceding claims, wherein if the other meeting appointment is kept, the method further comprises:
- rejecting, by the system, the priority meeting appointment; or
- proposing, by the system, an alternative meeting appointment for the priority meeting appointment; or
- overbooking, by the system, the one or more wanted user with the other meeting appointment and the priority meeting appointment, whereby the one or more wanted user can choose which meeting to attend.

7. The method according to any one of the preceding claims, wherein the method further comprises:
- storing, by the system, the precedence level and/or the temporary precedence level or criticality level of the priority user and/or of the one or more wanted user and/or of the one or more further user in a database of the system; and/or
- fetching, by the system, the precedence level and/or the temporary precedence level or criticality level of the priority user and/or of the one or more wanted user and/or of the one or more further user from a database of the system if one or more of these precedence levels were already stored in the database.

8. The method according to any one of the preceding claims, wherein the method comprises:
- using a groupware service with a groupware server, a web calendar application or scheduling system to schedule appointments, to exchange e-mail, notification, and/or message;
- using a groupware client or web browser client for collecting user input data; and
- using a communication and/or e-consultation system for the communication between users.

9. The method according to any one of the preceding claims, wherein the user input data and/or user input data options comprises text, voice, video, gestures and/or sensor data.

10. The method according to any one of the preceding claims, wherein the method further comprises:
- analyzing, by an analytics function of the system, the user input data and/or user input data options; and
- assigning, by the analytics function, the precedence level and/or the temporary precedence level or the criticality level to the priority user.

11. The method according to any one of the preceding claims, wherein the method further comprises presenting, by the communication application, to the priority user another meeting appointment of the one or more wanted user which has already been scheduled by one or more further users before the priority meeting appointment has been scheduled, wherein only the another meeting appointment of the one or more wanted user which has already been scheduled is presented which can be overwritten by the priority user due to his precedence level.

12. A system for remote meeting appointment priority overwrite, wherein the system is configured to perform the method according to any one of the claims 1 to 11.

13. The system according to claim 12, wherein the system further comprises:
- a groupware service with a groupware server, a web calendar application or scheduling system, wherein the groupware service in configured to schedule appointments, to exchange e-mail, notification, and/or message;
- a groupware client or web browser client which is connected to the groupware server or the web calendar application or the scheduling system; and
- a communication and/or e-consultation system.

14. The system according to any one of the claims 12 to 13, wherein the system further comprises an analytics function for analysis of user inputs and/or for calculating the precedence level and/or the temporary precedence level or criticality level of the priority user and/or the one or more wanted user and/or the one or more further user.

15. The system according to any one of the claims 12 to 14, wherein the system further comprises a user profile database configured to store user related information and data and/or the precedence level and/or the temporary precedence level or the criticality level.

16. The system according to any one of the claims 12 to 15, wherein the analytics function is configured to use machine learning, ML, artificial intelligence, Al, natural language processing, NLP, text-to-speech analytics and/or speech-to-text analytics.
